# EUROPEAN PATENT SPECIFICATION

(11) **EP 3 309 922 B1**
(45) Date of publication and mention of the grant of the patent: **07.08.2019**
(21) Application number: 16807090.2
(22) Date of filing: 01.06.2016
(51) Int. Cl.: H02J 3/38, H01M 10/44, H02J 7/00, H02J 9/06, H02J 3/46, H02J 3/32

(54) **POWER STORAGE SYSTEM, POWER STORAGE DEVICE, AND OPERATION METHOD FOR POWER STORAGE DEVICE**
ENERGIESPEICHERSYSTEM, ENERGIESPEICHERVORRICHTUNG UND BETRIEBSVERFAHREN FÜR ENERGIESPEICHERVORRICHTUNG
SYSTÈME DE STOCKAGE D'ÉNERGIE, DISPOSITIF DE STOCKAGE D'ÉNERGIE, ET PROCÉDÉ DE FONCTIONNEMENT DE DISPOSITIF DE STOCKAGE D'ÉNERGIE

(30) Priority: 12.06.2015 JP 2015119779
(43) Date of publication of application: 18.04.2018
(73) Proprietor: Panasonic Intellectual Property Management Co., Ltd., Osaka-shi, Osaka 540-6207 (JP)
(72) Inventor: YOSITAKE, Akira, Osaka-shi Osaka 540-6207 (JP); YOSHIMATSU, Takahiro, Osaka-shi Osaka 540-6207 (JP); YUASA, Hiroaki, Osaka-shi Osaka 540-6207 (JP); TERAMOTO, Yuichiro, Osaka-shi Osaka 540-6207 (JP); TOYONAGA, Tomohiko, Osaka-shi Osaka 540-6207 (JP); MATSUDA, Yasuhiro, Osaka-shi Osaka 540-6207 (JP)
(74) Representative: Appelt, Christian W.
(86) International application number: PCT/JP2016/002644
(87) International publication number: WO 2016/199380

(56) References cited:
- WO-A1-2013/187305
- WO-A1-2014/020644
- WO-A1-2014/080599
- WO-A1-2016/199377
- JP-A- H09 149 653
- JP-A- 2012 191 756
- JP-A- 2013 063 000
- JP-A- 2015 082 954
- JP-A- 2017 184 582
- US-A1- 2011 068 630

## Description

### Technical Field

The present invention generally relates to a power storage system, a power storage device, and an operation method for the power storage device.

### Background Art

A system for supplying electric power to a load by operating a plurality of power storage devices in parallel with each other has been known in the art.

For example, the system described in Patent Literature 1 includes not only a first power storage circuit with a storage battery but also a second power storage circuit with an electric double layer capacitor. When the power consumption of an external load increases momentarily, the first power storage circuit supplies electric power after the second power storage circuit has supplied electric power.

Meanwhile, a power storage system allowing a plurality of power storage devices to operate in parallel with each other has also been known in the art.

In such a power storage system, each power storage device outputs two-wire electric power. However, some users may need single-phase three-wire electric power. In addition, there is also a growing demand for increasing the capacity of single-phase three-wire power using a system with a simpler configuration.

### Citation List

### Patent Literature

Patent Literature 1: JP 2002-110210 A

WO 2013/187305 A1 describes a power supply system with: a distribution board that has a circuit to which single-phase three-wire system alternating current power is supplied from a power system; a fuel cell device that outputs single-phase three-wire system alternating current power; a storage cell device that outputs single-phase two-wire system alternating current power; and a transformer that is provided between the fuel cell device and the storage cell device, and converts the single-phase three-wire system alternating current power and the single-phase two-wire system alternating current power to each other. The circuit includes a voltage wire and a neutral wire to which an essential load is connected, the storage cell device supplies the single-phase two-wire system alternating current power to the voltage wire and the neutral wire and supplies the single-phase three-wire system alternating current power to the fuel cell device via the transformer during a power failure of the power system, and the fuel cell device supplies the single-phase two-wire system alternating current power to the voltage wire and the neutral wire via the transformer during the power failure of the power system.

WO 2014/080599 A1 describes an autonomous distribution board which receives feeding of power via a distribution board for a period during which grid power is supplied from a grid power source, while receiving power via an autonomous terminal of a power conversion apparatus for a period during which supplying of grid power from grid power source is stopped. The autonomous distribution board is connected with a specific load and the like. A measurement point switching apparatus is configured to select one from a current sensor configured to monitor a current that flows through a main breaker, and a current sensor configured to monitor a current that is supplied from power conversion apparatus to autonomous distribution board. A fuel battery is configured to adjust an output thereof based on an output of the selected one so that power by fuel battery is consumed by a general load, specific load and the like.

US 2011/068630 A1 describes an uninterruptable power source (UPS) device which is coupled to an external power source and another UPS device through a power line. The UPS device includes: a storage battery in which power from the external power source is charged, the UPS device being configured to be capable of supplying power charged in the first storage battery to the power line coupled to the UPS device; a communication unit that communicates with the another UPS device through the power line; and a determination unit that determines whether the power line is in normal condition or not based on whether a communication between the UPS device and the another UPS device has been successfully established or not. Power is supplied from the storage battery to the power line that has been determined to be in normal condition by the determination unit.

JP H09 149653 A describes a voltage control circuit which produces an error voltage signal, i.e., the differential voltage between the output voltage signal from one AC power supply and any one of the output voltage signal from another AC power supply operating in parallel or a reference voltage signal. A divider divides a load current value by the number of AC power supplies operating in parallel to produce a reference current value. A current control circuit produces an error current signal, i.e., a voltage corresponding to the difference between the reference current value outputted from the divider in another AC power supply and the output current value from a main circuit. The main circuit is controlled depending on any one of error voltage signal or error current signal.

JP 2015 082954 A describes an autonomous operation system comprising: power generators for supplying AC power to an AC bus separated from a commercial power system; a plurality of storage batteries for performing charge/discharge with DC power; a plurality of power converters which are connected to the plurality of storage batteries respectively and mutually convert AC power input/output to/from the AC bus and DC power used for charging/discharging the plurality of storage batteries respectively; and controllers for outputting voltage command values to the plurality of power converters respectively. The controller generates a voltage command value having a higher frequency for the converter of the plurality of converters as a charging rate of the storage battery connected to the power converter is higher.

WO 2014/020644 A1 describes a power supply system which is equipped with: a master power storage system for supplying an alternating current having predetermined voltage and frequency to a load; at least one slave power storage system for supplying an alternating current to the load on the basis of an instruction from the master power storage system; current detectors for detecting the currents supplied from the master power storage system and the slave power storage system to the load; and a voltage detector for detecting an output voltage and an output frequency of the master power storage system. A control unit of the master power storage system indicates, to a control unit of the slave power storage system, a value of current to be supplied to the load by the slave power storage system on the basis of the current values detected by the current detectors.

JP 2013 063000 A describes a system interconnection protection system which comprises a distribution passage connecting multiple power loads and multiple power supplies in a condominium in parallel with a commercial power supply system, multiple PCS disposed between the distribution passage and the multiple power supplies and supplying the power output from the multiple power supplies while converting the power into AC power synchronized with the phase of power flowing through the distribution passage, a switch which is provided in the trunk cable way for the multiple power loads and multiple power supplies in the condominium, in the distribution passage, and opens/closes between each power supply and commercial power system in the condominium, and a controller which detects abnormality in the commercial power supply system and opens/closes the switch depending on the detection results.

JP 2012 191756 A describes a power distribution system including a section switch interposed in a high voltage distribution line; and a pole-mounted transformer having primary-side terminals connected with high voltage distribution lines and secondary-side terminals connected with low voltage distribution lines. In this power distribution system, a transformer primary-side short circuit switch is prepared in parallel between the primary side terminals of the pole-mounted transformer. The transformer primary-side short circuit switch is closed when the section switch is opened, thus short-circuiting between the primary side terminals of the pole-mounted transformer.

### Summary

It is therefore an object of the present invention to provide a power storage system, power storage device, and operation method for the power storage device allowing single-phase three-wire power to be supplied by operating a plurality of power storage devices in parallel with each other and also allowing the capacity of single-phase three-wire power to be increased easily with a simple system configuration.

A power storage system according to the present invention includes: a plurality of power storage devices, each of which includes a storage battery and a power conditioner configured to convert DC power of the storage battery into two-wire AC power and output the two-wire AC power and which is switchable between a power grid interconnected operation and an autonomous operation without being interconnected with the utility power grid; and a transformer including a primary winding to which a two-wire AC voltage is applied and a secondary winding connected to a single-phase three-wire power line, a load being connected to the single-phase three-wire power line. The single-phase three-wire power line includes a first voltage line, a second voltage line, and a neutral line. The power conditioner of any one of the plurality of power storage devices is configured to apply a two-wire AC voltage to be output during the autonomous operation to the primary winding, and the power conditioner of the rest of the plurality of power storage devices has an output connected to the first voltage line and the second voltage line during the autonomous operation. If each of the plurality of power storage devices performs the autonomous operation, any one of the plurality of power storage devices is configured to serve as a master device, while the rest of the plurality of power storage devices, other than the one serving as the master device, is configured to serve as at least one slave device. The power conditioner of the master device is configured to perform voltage control of controlling an AC voltage output during the autonomous operation toward a target voltage. The at least one slave device further includes a data acquisition unit configured to acquire measured data of a first current flowing through the first voltage line and a second current flowing through the second voltage line. The power conditioner of the at least one slave device is configured to perform current control of controlling an output current toward a target current during the autonomous operation. The target current has been determined based on the measured data of the first current and the second current.

An operation method for the power storage system outlined above according to the present invention is a method for operating the power storage system. The method comprises performing voltage control of controlling an AC voltage output during the autonomous operation toward a target voltage by the power conditioner of the master device, and performing current control of controlling an output current toward a target current that has been determined based on measured data of a first current and a second current flowing through the first voltage line and the second voltage line, respectively, by the power conditioner of the at least one slave device.

### Brief Description of Drawings

FIG. 1 is a block diagram illustrating a configuration for a power storage system according to an embodiment;
FIG. 2 is a block diagram illustrating a configuration for a power storage device according to the embodiment;
FIG. 3 schematically illustrates how a second load may be connected to a plurality of power storage devices performing an autonomous operation according to the embodiment;
FIGS. 4A, 4B, 4C, and 4D are waveform charts showing the current waveforms of respective parts in a situation where an autonomous output control is performed in a different way from the embodiment; and
FIGS. 5A, 5B, 5C, and 5D are waveform charts showing the current waveforms of respective parts in a situation where an autonomous output control is performed in accordance with the embodiment.

### Description of Embodiment

An embodiment of the present invention will now be described with reference to the accompanying drawings.

The following embodiment generally relates to a power storage system, a power storage device, and an operation method for the power storage device, and more particularly relate to a power storage system, power storage device, and operation method for the power storage device in which a plurality of power storage devices are operated in parallel with each other.

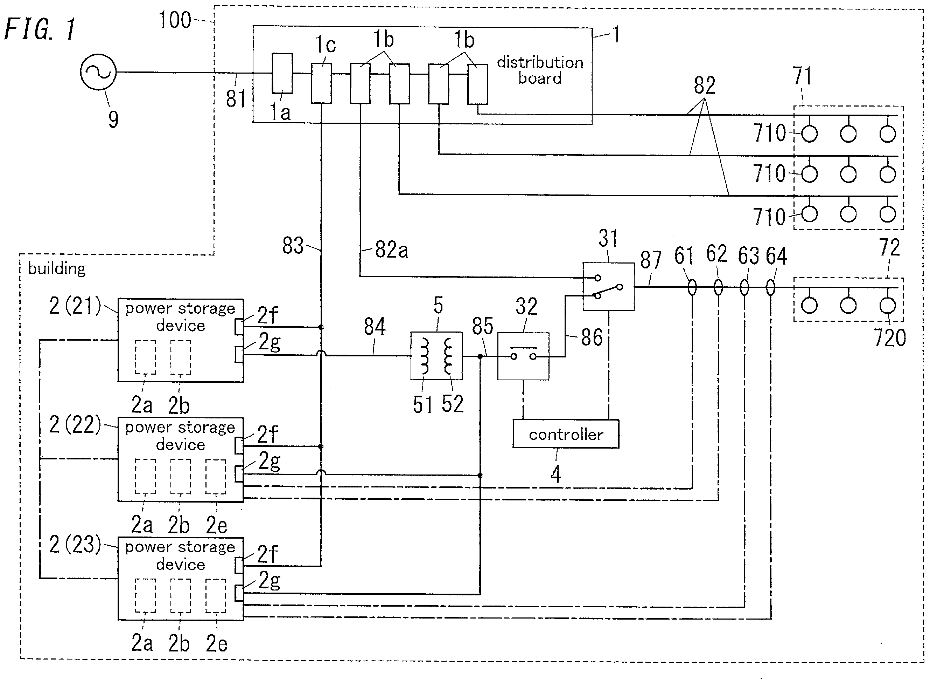

A power storage system 100 according to an embodiment of the present invention has the configuration shown in FIG. 1. This power storage system 100 may be used in a building supplied with utility power from a utility power company. Examples of such buildings include a dwelling unit of a multi-family dwelling house, a single-family house, a factory, and an office building. The power storage system 100 includes, as its essential components, a plurality of power storage devices 2 and a transformer 5. The power storage system 100 further includes a distribution board 1, switchboards 31, 32, and a controller 4. Although these power storage devices are generally designated herein by the reference numeral 2 as a matter of principle, the power storage devices 2 will be sometimes designated herein by the reference numerals 21, 22, 23, and so on, respectively, when they need to be distinguished from each other.

The distribution board 1 is connected to a trunk power line 81 extended into the building and is supplied with single-phase three-wire 200 V/100 V utility power from a power company's utility power supply 9 through the trunk power line 81, which is composed of two voltage lines and one grounded neutral line. In the distribution board 1, housed are a mains power supply breaker 1a, branch breakers 1b, and a distribution power supply breaker 1c. The trunk power line 81 is connected to each of the plurality of branch breakers 1b and the distribution power supply breaker 1c via the mains power supply breaker 1a.

The trunk power line 81 branches into a plurality of branch power lines 82 via the respective branch breakers 1b. A first load 71 is connected to each of the branch power lines 82. The first load 71 is composed of at least one electric appliance 710 such as a lighting fixture, an air conditioner, or any other consumer electronic appliance. Each of the branch power lines 82 supplies an AC power of 200 V or 100 V to its associated first load 71.

The trunk power line 81 also branches into a branch power line 82a via another branch breaker 1b. The branch power line 82a is connected to the switchboard 31. This branch power line 82a supplies a single-phase three-wire AC power of 200 V/100 V.

This power storage system includes the plurality of power storage devices 2, any one of which serves as a master device and the others of which serve as slave devices. According to this embodiment, each of the power storage devices 2 is provided with a selector such as a switch so as to function as either a master device or a slave device as the selector is turned. That is to say, power storage devices 2 of the same type are used as the master and slave devices according to this embodiment. In an alternative embodiment, a dedicated power storage device may be used as the master device and dedicated power storage devices may be used as the slave devices.

In the following description, the power storage device 21 is supposed to be a master device and the power storage devices 22, 23 are supposed to be slave devices.

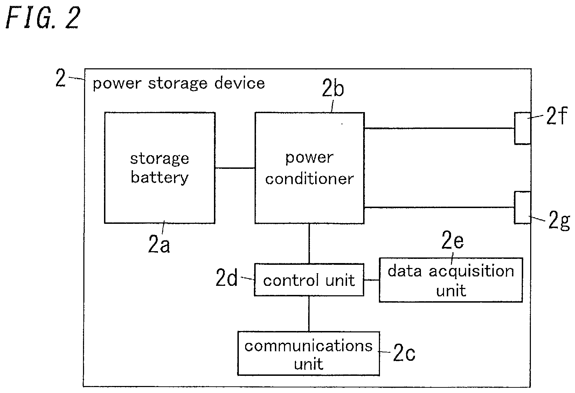

Each of the plurality of power storage devices 2 (functioning as the master device 21 and the slave devices 22, 23) includes a storage battery 2a, a power conditioner 2b, a communications unit 2c, a control unit 2d, and a data acquisition unit 2e as shown in FIG. 2.

The storage battery 2a may be implemented as a secondary battery such as a lithium-ion battery, and is connected to the power conditioner 2b. The power conditioner 2b has an AC/DC conversion function and a DC/AC conversion function. The AC/DC conversion function refers herein to the function of converting AC power into DC power to charge the storage battery 2a with the DC power. The DC/AC function refers herein to the function of converting the DC power of the storage battery 2a into AC power and outputting the AC power.

The power conditioner 2b suitably charges the storage battery 2a when the charge level of the storage battery 2a decreases to a preset value. Optionally, the power conditioner 2b may be configured to charge the storage battery 2a at regular intervals (e.g., at midnight) with power.

The power grid interconnector 2f of the power conditioner 2b receives utility power from the utility power supply 9 via the distribution power supply breaker 1c and an AC power line 83. The power conditioner 2b may convert the utility power received into DC power and charge the storage battery 2a with the DC power.

Also, the discharge power of the storage battery 2a is supplied to the power conditioner 2b, and is converted by the power conditioner 2b into two-wire 200 V AC power (i.e., with a line voltage of 200 V). This power conditioner 2b is switchable between a power grid interconnected operation and an autonomous operation. By detecting the AC voltage input to the power grid interconnector 2f, the power conditioner 2b determines whether the system is operating normally or causing a power failure. In the normal state, the utility power supply 9 supplies utility power. On the other hand, in the power failure state, the supply of utility power from the utility power supply 9 is discontinued.

More specifically, in the normal state in which the utility power supply 9 is energized, the power conditioner 2b performs a power grid interconnected operation. On the other hand, when the utility power supply 9 causes a power failure, the power conditioner 2b performs an autonomous operation. While performing the power grid interconnected operation, the power conditioner 2b outputs a two-wire 200 V AC power, generated from the discharge power of the storage battery 2a, through the power grid interconnector 2f while being interconnected with the utility power supply 9 (utility power grid). On the other hand, during the autonomous operation, the power conditioner 2b outputs two-wire 200 V AC power, generated from the discharge power of the storage battery 2a, through the autonomous connector 2g without being interconnected with the utility power grid.

In the following description, the AC power output from the power grid interconnector 2f will be hereinafter referred to as a "power grid output" and the AC power output from the autonomous connector 2g will be hereinafter referred to as an "autonomous output."

The power grid interconnector 2f is also connected to the AC power line 83. The power grid output is supplied from the AC power line 83 through the distribution power supply breaker 1c of the distribution board 1 to the trunk power line 81. Meanwhile, the power grid output is also supplied from the trunk power line 81 through the branch breakers 1b to the branch power lines 82. The power conditioners 2b have a power grid interconnection function, which is a function for establishing power cooperation between the power grid output and the utility power supplied by the utility power supply 9. In this embodiment, the AC power line 83 is a two-wire power line for transmitting two-wire 200 V AC power, and two voltage lines of the AC power line 83 are connected to their associated two voltage lines of the trunk power line 81.

The autonomous connector 2g of the master device 21 is connected to a two-wire AC power line 84. The autonomous output of the master device 21 is output to the AC power line 84. The two-wire AC power line 84 is electrically connected to a three-wire AC power line 85 via the transformer 5, which is an insulated transformer for converting two-wire 200 V AC power into single-phase three-wire 200 V/100 V AC power. This transformer 5 includes a primary winding 51 and a secondary winding 52. The two-wire AC power line 84 is connected to the primary winding 51, while the three-wire AC power line 85 is connected to the secondary winding 52. The switchboard 32 selectively connects or disconnects the three-wire AC power line 85 to/from another three-wire AC power line 86 to make these three-wire AC power lines 85 and 86 electrically conductive or isolated with/from each other. The switchboard 31 selectively connects a three-wire autonomous power line 87 to either the branch power line 82a or the AC power line 86. The autonomous power line 87 is composed of a first voltage line, a second voltage line, and a single grounded neutral line. A second load 72 is connected to the autonomous power line 87. The second load 72 is composed of at least one electric appliance 720 such as a lighting fixture, an air conditioner, or any other consumer electronic appliance.

In this embodiment, the trunk power line 81 is a three-wire power line for transmitting single-phase three-wire 200 V/100 V AC power. Each of the branch power lines 82 is either a three-wire power line for transmitting single-phase three-wire 200 V/100 V AC power or a two-wire power line for transmitting two-wire 200 V/100 V AC power. Meanwhile, the branch power line 82a is a three-wire power line for transmitting single-phase three-wire 200 V/100 V AC power. Each of the AC power lines 83, 84 is a two-wire power line for transmitting two-wire 200 V AC power. Each of the AC power lines 85, 86 and the autonomous power line 87 is a three-wire power line for transmitting single-phase three-wire 200 V/100 V AC power.

The respective autonomous connectors 2g of the slave devices 22, 23 are connected to the three-wire AC power line 85. Each autonomous output of the slave devices 22, 23 is output through the AC power line 85, the switchboard 32, the AC power line 86, and the switchboard 31 to the autonomous power line 87. In this embodiment, the respective autonomous outputs of the slave devices 22, 23 are connected to the two voltage lines of the three-wire AC power line 85.

The controller 4 controls the respective switching states of the switchboards 31, 32. The controller 4 determines whether the system is operating normally or causing a power failure by detecting a voltage at the primary-side terminal of the mains power supply breaker 1a, for example. On determining that the system is operating normally, the controller 4 controls the switching state of the switchboard 31 to connect the autonomous power line 87 to the branch power line 82a and to turn the switchboard 32 OFF. On the other hand, on determining that the system is causing a power failure, the controller 4 controls the switching state of the switchboard 31 to connect the autonomous power line 87 to the AC power line 86, and after the power storage devices 2 have all been activated, turns the switchboard 32 ON to make the AC power lines 85, 86 electrically conductive with each other.

In the normal operation state, the autonomous power line 87 is connected by the switchboard 31 to the branch power line 82a, thus making the power line leading from the branch power line 82a to the autonomous power line 87 electrically conductive and supplying the power on the trunk power line 81 (i.e., the sum of the utility power and the power grid output) to the autonomous power line 87. Furthermore, in the normal operation state, the trunk power line 81 is cut off from the respective autonomous connectors 2g of the slave devices 22, 23. This ensures safety because no power is externally supplied to the autonomous connectors 2g.

On the other hand, in the power failure state, the autonomous power line 87 is connected by the switchboard 31 to the AC power line 86, and the AC power line 86 is connected by the switchboard 32 to the AC power line 85. This makes the power line leading from the respective autonomous connectors 2g of the master device 21 and slave devices 22, 23 to the autonomous power line 87 electrically conductive, thus supplying the respective autonomous outputs of the master device 21 and slave devices 22, 23 to the autonomous power line 87.

In the power storage system 100, the first load 71 connected to the branch power lines 82 is supplied with power only in the normal operation state in which the utility power supply 9 is energized. On the other hand, the second load 72 connected to the autonomous power line 87 is supplied with power both in the normal operation state where the utility power supply 9 is energized and in the state where the utility power supply 9 is causing a power failure.

The autonomous power line 87 to which the second load 72 is electrically connected is composed of two voltage lines and a single grounded neutral line. This autonomous power line 87 is provided with current sensors 61-64, which measure load currents flowing through the respective voltage lines of the autonomous power line 87. Specifically, the voltage sensor 61 measures a load current (hereinafter referred to as a "first current") flowing through the first voltage line and outputs resultant measured data to the slave device 22. The voltage sensor 62 measures a load current (hereinafter referred to as a "second current") flowing through the second voltage line and outputs resultant measured data to the slave device 22. The voltage sensor 63 measures the load current (i.e., the first current) flowing through the first voltage line and outputs resultant measured data to the slave device 23. The voltage sensor 64 measures the load current (i.e., the second current) flowing through the second voltage line and outputs resultant measured data to the slave device 23. Each of these current sensors 61-64 generates and outputs the measured data in every sampling period.

The data acquisition unit 2e of each of the slave devices 22, 23 receives the measured data, which has been transmitted toward their own device, and passes the measured data to the control unit 2d.

The communications unit 2c of each power storage device 2 may communicate either wirelessly or through a cable with the communications unit 2c of any of the other power storage devices 2. The control unit 2d controls the communications carried out by the communications unit 2c.

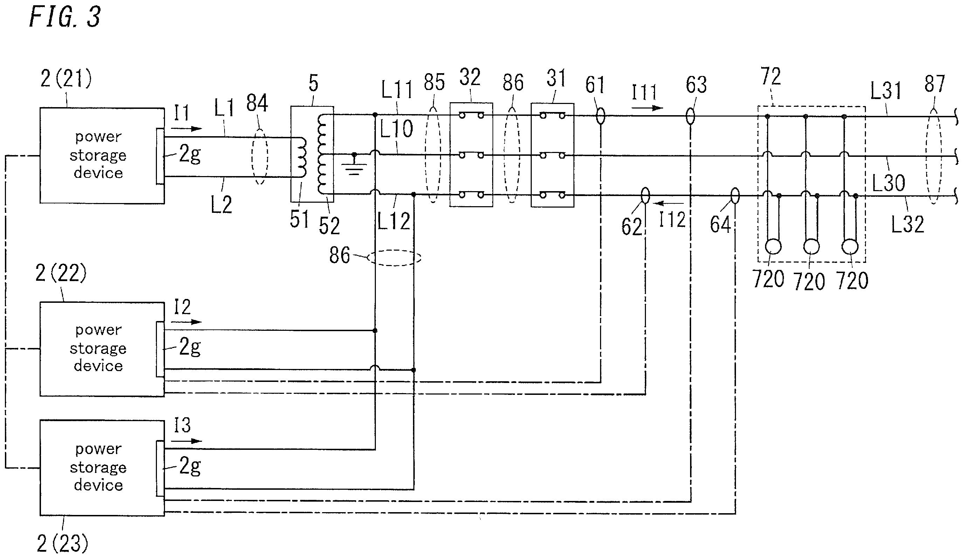

Next, it will be described with reference to FIG. 3 how the power storage devices 2 perform an autonomous operation in the power failure state. FIG. 3 schematically illustrates only how the plurality of power storage devices 2 performing the autonomous operation are connected to the second load 72.

The AC power line 84 connected to the autonomous connector 2g of the master device 21 is composed of two wires, namely, the voltage lines L1, L2. The voltage line L1 is connected to one terminal of the primary winding 51 of the transformer 5, while the voltage line L2 is connected to the other terminal of the primary winding 51 of the transformer 5. The transformer 5 includes a secondary winding 52. One terminal of the secondary winding 52 is connected to the voltage line L11 of the AC power line 85, the other terminal of the secondary winding 52 is connected to the voltage line L12 of the AC power line 85, and a neutral point of the secondary winding 52 is connected to the neutral line L10 of the AC power line 85.

That is to say, the transformer 5 converts two-wire 200 V AC power, supplied from the AC power line 84, into single-phase three-wire 200 V/100 V power and outputs the 200 V/100 V power to the AC power line 85. In this case, the line voltage between the voltage lines L11 and L12 becomes 200 V, the line voltage between the voltage line L11 and the neutral line L10 becomes 100 V, and the line voltage between the voltage line L12 and the neutral line L10 becomes 100 V.

The autonomous connectors 2g of the slave devices 22, 23 are connected to the voltage lines L11 and L12 of the AC power line 85.

The voltage line L11, voltage line L12, and neutral line L10 of the AC power line 85 are respectively electrically connected to the first voltage line L31, second voltage line L32, and neutral line L30 of the autonomous power line 87 through the switchboard 32, the AC power line 86, and the switchboard 31. That is to say, the line voltage between the first and second voltage lines L31 and L32 becomes 200 V, the line voltage between the first voltage line L31 and the neutral line L30 becomes 100 V, and the line voltage between the second voltage line L32 and the neutral line L30 becomes 100 V.

That is to say, the autonomous outputs of the respective power conditioners 2b of the master device 21 and slave devices 22, 23 are connected in parallel with each other to the first and second voltage lines L31 and L32 of the autonomous power line 87 in the autonomous operation state. In other words, the master device 21 and the slave devices 22, 23 operate in parallel with each other. In FIG. 3, the second load 72 is electrically connected between the first and second voltage lines L31 and L32.

During both of the power grid interconnected operation and the autonomous operation, the control unit 2d of each of the master device 21 and slave devices 22, 23 exchanges signals such as an alive signal at regular intervals with the other power storage devices 2 via the communications unit 2c. The control unit 2d is able to recognize the number of power storage devices 2 in the power storage system 100 based on a signal received from another power storage device 2, and retains data about the number of power storage devices 2 in the power storage system 100.

When the master device 21 and the slave devices 22, 23 start performing the autonomous operation, the control unit 2d of the master device 21 instructs the power conditioner 2b to perform a constant voltage operation. More specifically, the control unit 2d of the master device 21 notifies the power conditioner 2b of a target voltage. The power conditioner 2b, having been instructed to perform a constant voltage operation, performs voltage control such that the voltage of the autonomous output agrees with a target voltage, which is set to be the nominal voltage of utility power, e.g., 200 V in this example.

In each of the slave devices 22, 23 that have started performing the autonomous operation, the control unit 2d instructs the power conditioner 2b to perform a constant current operation. More specifically, the control unit 2d of each of the slave devices 22, 23 notifies the power conditioner 2b of a target current. The power conditioner 2b, having been instructed to perform a constant current operation, performs current control such that the current of the autonomous output agrees with the target current. In the power conditioner 2b which has been instructed to perform a constant current operation, the voltage of the autonomous output is in the vicinity of the nominal voltage of utility power, e.g., 200 V.

Making the master device 21 and the slave devices 22, 23 communicate with each other allows each of the slave devices 22, 23 to start performing the autonomous operation for the purpose of current control after the master device 21 has started performing the autonomous operation for the purpose of voltage control. Alternatively, making the master device 21 and slave devices 22, 23 communicate with each other may also synchronize the autonomous outputs with each other.

Specifically, the control unit 2d of each of the slave devices 22, 23 is able to derive the total amount of power consumed by the second load 72 (overall power consumption) based on the measured data of the load currents I11 and 112 of the first and second voltage lines L31 and L32, respectively. In this case, the load current I11 of the first voltage line L31 corresponds to a load current of a 100 V power circuit composed of the first voltage line L31 and the neutral line L30. The load current 112 of the second voltage line L32 corresponds to a load current of a 100 V power circuit composed of the second voltage line L32 and the neutral line L30. Therefore, overall power consumption = {load current I11 + load current I12} × 100. The control unit 2d of each of the slave devices 22, 23 calculates a converted current by dividing the overall power consumed by the autonomous output voltage of 200 V. The converted current is updated at regular intervals in every sampling period of the current sensors 61-64. Note that the positive flow directions of the load currents 111 and 112 are as indicated by the arrows in FIG. 3.

As used herein, the "converted current" is obtained by converting the measured data of the load currents I11 and 112 into a current corresponding to the line voltage of 200 V between the first and second voltage lines L31 and L32. That is to say, the converted current is an amount of current allowing the electric power required by the second load 72 for a two-wire 200 V power line with a line voltage of 200 V (i.e., the overall power consumed) to be supplied. The control unit 2d of each of the slave devices 22, 23 suitably calculates a target current by dividing this converted current by the number of the power storage devices 2 (e.g., three in this example).

Alternatively, the control unit 2d of each of the slave devices 22, 23 may also derive the converted current by the equation: converted current = {load current I11 + load current I12} / 2.

That is to say, each of the slave devices 22, 23 sets the target current such that the respective power storage devices 2 in the system take charge of an evenly divided portion the total power load. Thus, the respective autonomous outputs of the slave devices 22, 23 come to have the same current value and the same waveform. Consequently, the autonomous output of the master device 21 performing the voltage control also comes to have the same current value and the same waveform as the respective autonomous outputs of the slave devices 22, 23.

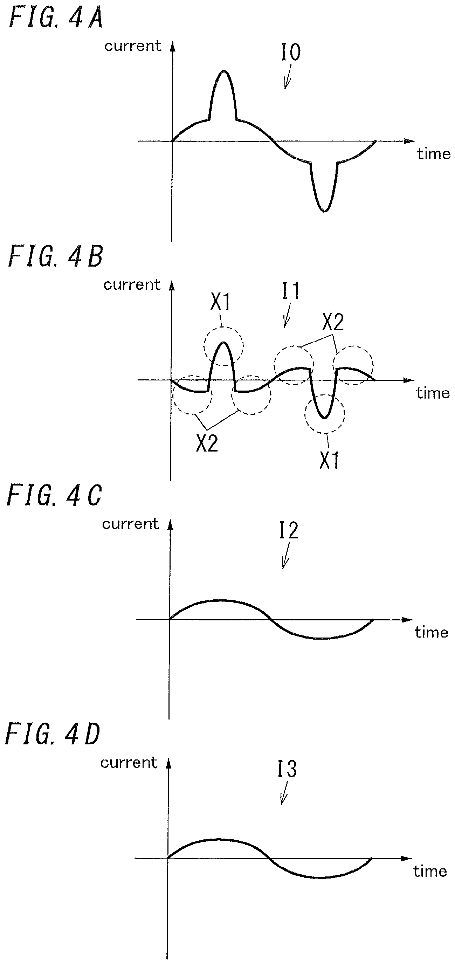

FIGS. 4A, 4B, 4C, and 4D illustrate current waveforms of respective parts in a situation where the master device 21 performs voltage control and each of the slave devices 22, 23 performs current control in a different way from the embodiment described above. The current control performed by each of the slave devices 22, 23 uses a sinusoidal wave as the current waveform of the autonomous output, which is a major difference from the current control of this embodiment.

FIG. 4A illustrates the waveform of a converted current 10. FIG. 4B illustrates the waveform of the current of the autonomous output (i.e., autonomous current) of the master device 21. FIG. 4C illustrates the waveform of the autonomous current 12 of the slave device 22. FIG. 4D illustrates the waveform of the autonomous current I3 of the slave device 23. Note that the converted current 10 is a current required when a 200 V system should take charge of the total power load, and is represented by the sum of the respective autonomous currents 11, 12, and I3 of the master device 21 and slave devices 22, 23.

In this case, the second load 72 includes a capacitive load (such as a capacitor input load). Therefore, the converted current I0 steeply rises in the vicinity of a voltage peak and has a distorted waveform. If each of the slave devices 22, 23 performs current control using a sinusoidal wave as the current waveform of the autonomous output, then the master device 21 may take charge of most of the waveform distortion component, thus possibly causing a bias in output between the master device 21 and the slave devices 22, 23. For example, if the autonomous current I1 of the master device 21 takes charge of most of the waveform distortion component of the converted current 10, then the autonomous current I1 will be distorted as shown in FIG. 4B to be an overcurrent (as in the regions XI shown in FIG. 4B), thus causing the master device 21 to lose the stability of its operation. In addition, in some charging modes, the autonomous current I1 of the master device 21 may have an opposite polarity from the converted current's 10 (as in the regions X2 in FIG. 4B), thus possibly negatively affecting the system's safety.

Thus, according to this embodiment, the master device 21 performs voltage control and each of the slave devices 22, 23 performs current control by taking charge of an evenly divided portion of the converted current 10 as described above.

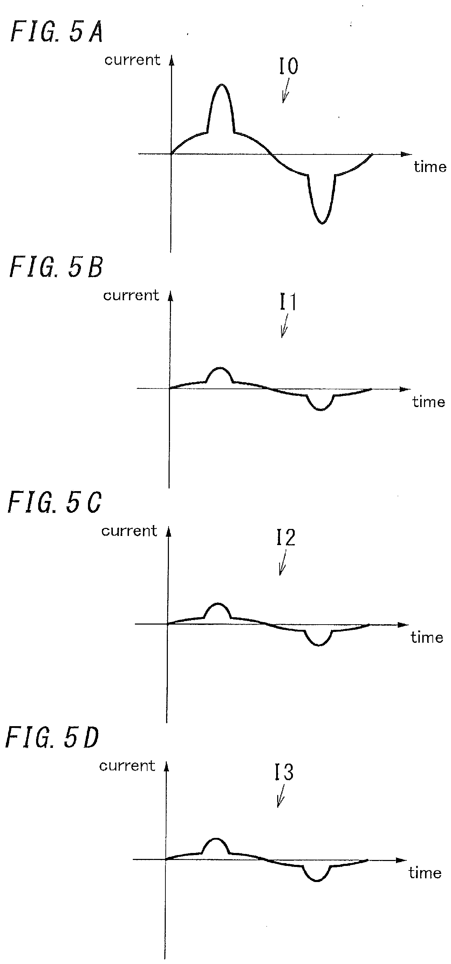

FIGS. 5A, 5B, 5C, and 5D illustrate current waveforms of respective parts in a situation where the master device 21 performs voltage control and each of the slave devices 22, 23 performs current control by taking charge of an evenly divided portion of a converted current 10. FIG. 5A illustrates the waveform of a converted current 10. FIG. 5B illustrates the waveform of the autonomous current I1 of the master device 21. FIG. 5C illustrates the waveform of the autonomous current 12 of the slave device 22. FIG. 5D illustrates the waveform of the autonomous current I3 of the slave device 23.

In this case, the second load 72 also includes a capacitive load. Therefore, the converted current I0 steeply rises in the vicinity of a voltage peak and has a distorted waveform. However, making the master device 21 perform the voltage control described above and making each of the slave devices 22, 23 perform current control by taking charge of an evenly divided portion of the converted current I0 allows the respective autonomous currents 11, 12, and I3 of the master device 21 and the slave devices 22, 23 to have approximately the same current value and waveform. As a result, the autonomous currents 11, 12, and I3 become hardly biased. That is to say, each of the slave devices 22, 23 sets the target current such that the respective power storage devices 2 in the system take charge of evenly divided portions of the converted current 10.

Thus, the autonomous currents I1, 12, and I3 also almost evenly take charge of the waveform distortion component of the converted current I0, thus reducing the frequency of occurrence of the charging mode in which the autonomous currents have an opposite polarity from the converted current's I0. That is to say, if a plurality of autonomously operating power storage devices 2 are operating in parallel with each other, the power storage system according to this embodiment is able to reduce the degree of bias in the load placed on the respective power storage devices 2.

In addition, even in the normal operation state, the master device 21 also performs the power grid interconnected operation by performing the voltage control described above, and each of the slave devices 22, 23 also performs the power grid interconnected operation by performing the current control described above. Alternatively, in the normal operation state, not only the slave devices 22, 23 but also the master device 21 may perform the power grid interconnected operation by performing the current control described above. In that case, the master device 21 is also allowed to acquire the measured data of the load currents 111 and 112 flowing through the first and second voltage lines L31 and L32, respectively.

The power storage device 2 connected to the primary-side terminal of the transformer 5 does not have to be the master device 21 but may also be the slave device 22 or 23. In that case, the master device 21 will be connected to the secondary-side terminal of the transformer 5. Even in such an alternative embodiment, the same advantages as the ones described above are also achievable by having the master device 21 perform the voltage control and by having the slave devices 22, 23 perform the current control in the same way as described above.

The control unit 2d of each of the slave devices 22, 23 is able to communicate with the master device 21 via the communications unit 2c, and transmits remaining capacity data to the master device 21 at regular intervals. As used herein, the "remaining capacity data" represents the charge level of the storage battery 2a. The control unit 2d of the master device 21 is able to learn about the currently remaining capacities (charge levels) of the slave devices 22, 23. Thus, it is recommended that the control unit 2d of the master device 21 calculate a weighting factor for adding weight to the respective target currents of the slave devices 22, 23 based on the respective remaining capacity data of its own device and the slave devices 22, 23.

The control unit 2d of the master device 21 calculates a weighting factor α based on the respective remaining capacity data of its own device and the slave devices 22, 23. More specifically, the control unit 2d of the master device 21 calculates the ratio of the remaining capacity of each of the slave devices 22, 23 to that of its own device [slave device's remaining capacity/master device's remaining capacity] as the weighting factor α. That is to say, the weighting factor α2 for the slave device 22 is given by [slave device's 22 remaining capacity/master device's 21 remaining capacity], while the weighting factor α3 for the slave device 23 is given by [slave device's 23 remaining capacity/master device's 21 remaining capacity]. Then, the control unit 2d of the master device 21 transmits data about the weighting factor α2 to the slave device 22, and also transmits data about the weighting factor α3 to the slave device 23.

The control unit 2d of the slave device 22 divides the converted current by the number of the power storage devices 2, multiplies the quotient thus calculated by the weighting factor α2, and sets the product thus obtained to be a target current. On the other hand, the control unit 2d of the slave device 23 divides the converted current by the number of the power storage devices 2, multiplies the quotient thus calculated by the weighting factor α3, and sets the product thus obtained to be a target current.

That is to say, each of the plurality of power storage devices 2 further includes a communications unit 2c with the ability to communicate with the other power storage devices 2. Each of the slave devices 22, 23 transmits remaining capacity data, representing the remaining capacity of its own device's storage battery 2a, to the master device 21. In response, in accordance with the remaining capacity data of the slave devices 22, 23 and the remaining capacity data of its own device, the master device 21 sets a factor α, which increases as the remaining capacity increases, for each of the power storage devices 2, and transmits data about associated factors α to the respective slave devices 22, 23. Each of the slave devices 22, 23 further includes a control unit 2d for converting the measured data of the load currents I11 and 112 into a converted current corresponding to the line voltage of 200 V between the first and second voltage lines L31 and L32. The control unit 2d of the slave devices 22, 23 divides the converted current by the number of the power storage devices 2, multiplies the quotient thus calculated by the factor α, and sets the product thus obtained to be a target current.

That is to say, the amount of the autonomous current supplied from a power storage device 2 with a relatively large remaining capacity increases, while the amount of the autonomous current supplied from a power storage device 2 with a relatively small remaining capacity decreases. This allows the power storage system 100 to reduce the bias in output AC power between the respective power storage devices 2 and to make the remaining capacities of the storage batteries 2a of the respective power storage devices 2 as uniform as possible as current loads corresponding to the remaining capacities of the respective power storage devices 2.

As can be seen from the foregoing description of embodiments, a power storage system (100) according to the present invention includes a plurality of power storage devices (2) and a transformer (5). Each of the plurality of power storage devices (2) includes a storage battery (2a) and a power conditioner (2b) configured to convert DC power of the storage battery (2a) into two-wire AC power and output the two-wire AC power, and is switchable between a power grid interconnected operation and an autonomous operation. The transformer (5) includes a primary winding (51) and a secondary winding (52). A two-wire AC voltage is applied to the primary winding (51). The secondary winding (52) is connected to a single-phase three-wire autonomous power line (87) (power line), to which a second load (72) (load) is connected. The autonomous power line (87) includes a first voltage line (L31), a second voltage line (L32), and a neutral line (L30).

The power conditioner (2b) of any one (2) of the plurality of power storage devices (2) is configured to apply a two-wire AC voltage to be output during the autonomous operation to the primary winding (51). The power conditioner (2b) of the rest of the plurality of power storage devices (2) has an output connected to the first voltage line and the second voltage line (L31, L32) during the autonomous operation. If each of the plurality of power storage devices (2) performs the autonomous operation, any one (2) of the plurality of power storage devices (2) is configured to serve as a master device (21), while the rest of the power storage devices (2), other than the one (2) serving as the master device (21), is configured to serve as at least one slave device (22, 23). The power conditioner (2b) of the master device (21) is configured to perform voltage control of controlling an AC voltage output during the autonomous operation toward a target voltage. The at least one slave device (22, 23) further includes a data acquisition unit (2e) configured to acquire measured data of a first current (load current I11) flowing through the first voltage line (L31) and a second current (load current 112) flowing through the second voltage line (L32). The power conditioner (2b) of the at least one slave device (22, 23) is configured to perform current control of controlling an output current toward a target current, which has been determined based on the measured data of the first current and the second current, during the autonomous operation.

The power storage system (100) according to the invention includes the transformer (5) for converting two-wire power into single-phase three-wire power. The autonomous output of one power storage device (2) is input to a primary-side terminal of the transformer (5) and converted by the transformer (5) into single-phase three-wire power. The autonomous output of each of the other power storage device(s) (2) is connected to the secondary-side terminal of the transformer (5) so as to be directly supplied to the single-phase three-wire power line.

Meanwhile, the respective autonomous outputs of all of the power storage devices (2) could be connected to the primary-side terminal of a single transformer so that all autonomous outputs of all of the power storage devices (2) would be converted by the transformer into single-phase three-wire power. In that case, however, the capacity of the transformer should correspond to the sum of all autonomous outputs of all of the power storage devices (2), which would cause an increase in the size and cost of the transformer.

In contrast, in the power storage system (100) according to the invention, only the autonomous output of a single power storage device (2) is connected to the primary-side terminal of the transformer (5), and the autonomous output of the other power storage device(s) (2) is connected to the secondary-side terminal of the transformer (5). This allows the transformer (5) to have a capacity corresponding to the autonomous output of the single power storage device (2). Thus, the power storage system (100) according to the invention provides a simplified system configuration by reducing the size and cost of the transformer (5). In addition, the power storage system (100) according to the invention, having such a simple system configuration, operates a plurality of power storage devices (2) in parallel with each other, thus contributing to increasing the capacity of single-phase three-wire power.

That is to say, the power storage system (100) according to the invention allows for supplying single-phase three-wire power by operating the plurality of power storage devices (2) in parallel with each other and increasing the capacity of the single-phase three-wire power easily using a simple system configuration.

In a power storage system (100) according to a first embodiment of the present invention, which is dependent on the invention the power conditioner (2b) of the master device (21) may be configured to apply the two-wire AC voltage to be output during the autonomous operation to the primary winding (51). The power conditioner (2b) of the at least one slave device (22, 23) may have an output connected to the first voltage line and the second voltage line (L31, L32) during the autonomous operation.

In the power storage system (100) according to the first embodiment, the autonomous output of the master device (21) is input to the primary-side terminal of the transformer (5), and converted by the transformer (5) into single-phase three-wire power. The autonomous output of the at least one slave device (22, 23) is connected to the secondary-side terminal of the transformer (5) so as to be directly supplied to the single-phase three-wire power line. That is to say, only the autonomous output of the master device (21) is connected to the primary-side terminal of the transformer (5), and the autonomous output of the at least one slave device (22, 23) is connected to the secondary-side terminal of the transformer (5). This allows the transformer (5) to have a capacity corresponding to the autonomous output of the master device (21). Thus, the power storage system (100) provides a simplified system configuration by reducing the size and cost of the transformer (5). In addition, the power storage system (100), having such a simple system configuration, operates a plurality of power storage devices (2) in parallel with each other, thus contributing to increasing the capacity of the single-phase three-wire power.

In a power storage system (100) according to a second embodiment of the present invention, which is dependent on the invention or the first embodiment, the at least one slave device (22, 23) may further include a control unit (2d) configured to convert the measured data of the first current and the second current into a converted current, corresponding to a line voltage of 200 V between the first voltage line and the second voltage line (L31, L32), and calculate the target current by dividing the converted current.

A power storage system (100) according to the second embodiment is able to set the target current of the at least one slave device (22, 23) appropriately based on the converted current.

In a power storage system (100) according to a third embodiment of the present invention, which is dependent on the second embodiment, the control unit (2d) may be configured to calculate the target current by dividing the converted current by the number of the plurality of power storage devices (2).

In the power storage system (100) according to the third embodiment, the target current is determined uniformly based on the converted current and the number of the plurality of power storage devices (22), and the at least one slave device (22, 23) performs current control of controlling the output current toward the target current. Thus, the respective autonomous outputs of the plurality of power storage devices (2) are allowed to have substantially the same current value and waveform, and become hardly biased.

An operation method for the power storage system according to the present invention is a method for operating a power storage system (100) including a plurality of power storage devices (2) and a transformer (5). Each of the plurality of power storage devices (2) includes a storage battery (2a) and a power conditioner (2b) configured to convert DC power of the storage battery (2a) into two-wire AC power and output the two-wire AC power, and is switchable between a power grid interconnected operation and an autonomous operation. The transformer (5) includes a primary winding (51) and a secondary winding (52). A two-wire AC voltage is applied to the primary winding (51). The secondary winding (52) is connected to a single-phase three-wire autonomous power line (87) (power line), to which a second load (72) (load) is connected. The autonomous power line (87) includes a first voltage line (L31), a second voltage line (L32), and a neutral line (L30).

The power conditioner (2b) of any one (2) of the plurality of power storage devices (2) is configured to apply a two-wire AC voltage to be output during the autonomous operation to the primary winding (51). The power conditioner (2b) of the rest of the plurality of power storage devices (2) has an output connected to the first voltage line and the second voltage line (L31, L32) during the autonomous operation. If each of the plurality of power storage devices (2) performs the autonomous operation, any one of the plurality of power storage devices (2) is configured to serve as a master device (21), while the rest of the plurality of power storage devices (2), other than the one (2) serving as the master device (21), is configured to serve as at least one slave device (22, 23). The power conditioner (2b) of the master device (21) is configured to perform voltage control of controlling an AC voltage output during the autonomous operation toward a target voltage. The power conditioner (2b) of the at least one slave device (22, 23) is configured to perform current control of controlling an output current toward a target current that has been determined based on measured data of a first current and a second current (load currents I11, 112) flowing through the first voltage line and the second voltage line (L31, L32), respectively.

An operation method for the power storage system according to the invention allows for supplying single-phase three-wire power by operating a plurality of power storage devices (2) in parallel with each other and increasing the capacity of the single-phase three-wire power easily using a simple system configuration.

Note that each power storage device 2 includes a built-in computer and the function of the control unit 2d of the power storage device 2 described above is performed by making the computer execute a program. The computer includes, as major components, a device with a processor executing a program, an interface device for exchanging data with other devices, and a storage device for storing data. The device with a processor may be a central processing unit (CPU) or micro processing unit (MPU) provided separately from a semiconductor memory, or a microcomputer including a semiconductor memory as an integral component. As the storage device, a storage device with a short access time such as a semiconductor memory and a storage device with a large storage capacity such as a hard disk drive may be used in combination.

The program may be provided as either having been pre-stored on some storage medium such as a computer-readable read-only memory (ROM) or an optical disc or being downloaded onto a storage medium over a broadband communications network such as the Internet.

Although the present invention has been described with reference to exemplary embodiments, those embodiments should not be construed as limiting but numerous modifications or variations can be readily made by those skilled in the art depending on their design choice or any other factor without departing from the scope of the invention as defined by the appended claims.

### Reference Signs List

- 100: Power Storage System
- 1: Distribution Board
- 2: Power Storage Device
- 21: Master Device
- 22, 23: Slave Device
- 2a: Storage Battery
- 2b: Power Conditioner
- 2c: Communications Unit
- 2d: Control Unit
- 2e: Data Acquisition Unit
- 2f: Power Grid Interconnector
- 2g: Autonomous Connector
- 31,32: Switchboard
- 4: Controller
- 5: Transformer
- 51: Primary Winding
- 52: Secondary Winding
- 61-64: Current Sensor
- 71: First Load
- 72: Second Load
- 81: Trunk Power Line
- 82: Branch Power Line
- 82a: Branch Power Line
- 83-86: AC Power Line
- 87: Autonomous Power Line

## Claims

1. A power storage system (100) comprising:
a plurality of power storage devices (2), each of the plurality of power storage devices (2) including a storage battery (2a) and a power conditioner (2b) configured to convert DC power of the storage battery (2a) into two-wire AC power and output the two-wire AC power, each of the plurality of power storage devices (2) being switchable between a power grid interconnected operation and an autonomous operation without being interconnected with the utility power grid; and
a transformer (5) including: a primary winding (51) to which a two-wire AC voltage is applied; and a secondary winding (52) connected to a single-phase three-wire power line, a load being connected to the single-phase three-wire power line (85), wherein
the single-phase three-wire power line (85) includes a first voltage line (L11), a second voltage line (L12), and a neutral line (L10),
the power conditioner (2b) of any one (21) of the plurality of power storage devices (2) is configured to apply a two-wire AC voltage to be output during the autonomous operation to the primary winding (51), and the power conditioner (2b) of the rest (22, 23) of the plurality of power storage devices (2) has an output connected to the first voltage line (L11) and the second voltage line (L12) during the autonomous operation,
if each of the plurality of power storage devices (2) performs the autonomous operation, any one of the plurality of power storage devices (2) is configured to serve as a master device (21), while the rest of the plurality of power storage devices (2), other than the one serving as the master device (21), is configured to serve as at least one slave device (22, 23),
the power conditioner (2b) of the master device (21) is configured to perform voltage control of controlling an AC voltage output during the autonomous operation toward a target voltage, and
the at least one slave device (22, 23) further includes a data acquisition unit (2e) configured to acquire measured data of a first current flowing through the first voltage line (L11) and a second current flowing through the second voltage line (L12), the power conditioner (2b) of the at least one slave device (22, 23) being configured to perform current control of controlling an output current toward a target current during the autonomous operation, the target current having been determined based on the measured data of the first current and the second current.

2. The power storage system (100) of claim 1, wherein
the power conditioner (2b) of the master device (21) is configured to apply the two-wire AC voltage to be output during the autonomous operation to the primary winding (51), and
the power conditioner (2b) of the at least one slave device (22, 23) has an output connected to the first voltage line (L11) and the second voltage line (L12) during the autonomous operation.

3. The power storage system (100) of claim 1 or 2, wherein
the at least one slave device (22, 23) further includes a control unit (2d) configured to convert the measured data of the first current and the second current into a converted current corresponding to a line voltage between the first voltage line (L11) and the second voltage line (LI2) and calculate the target current by dividing the converted current.

4. The power storage system of claim 3, wherein
the control unit (2d) is configured to calculate the target current by dividing the converted current by the number of the plurality of power storage devices (2).

5. An operation method for the power storage system (100) of any one of claims 1 to 4, comprising steps of:
performing voltage control of controlling an AC voltage output during the autonomous operation toward a target voltage by the power conditioner (2b) of the master device (21), and
performing current control of controlling an output current toward a target current that has been determined based on measured data of a first current and a second current flowing through the first voltage line and the second voltage line, respectively, by the power conditioner (2b) of the at least one slave device (22, 23).

## Patentansprüche

1. Energiespeichersystem (100), umfassend:
mehrere Energiespeichervorrichtungen (2), wobei jede der mehreren Energiespeichervorrichtungen (2) eine Speicherbatterie (2a) und einen Energieaufbereiter (2b) aufweist, der konfiguriert ist, um eine Gleichspannung der Speicherbatterie (2a) in eine zweiadrige Wechselspannung umzuwandeln und die zweiadrige Wechselspannung auszugeben, wobei jede der mehreren Energiespeichervorrichtungen (2) zwischen einem mit dem Stromnetz verbundenen Betrieb und einem autonomen, mit dem Stromnetz nicht verbundenen Betrieb umschaltbar ist; und
einen Transformator (5), der Folgendes aufweist: eine Primärwicklung (51), an die eine zweiadrige Wechselspannung angelegt wird; und eine Sekundärwicklung (52), die mit einer einphasigen dreiadrigen Netzleitung verbunden ist, wobei mit der einphasigen dreiadrigen Netzleitung (85) eine Last verbunden ist, wobei
die einphasige dreiadrige Netzleitung (85) eine erste Spannungsleitung (L11), eine zweite Spannungsleitung (L12) und eine neutrale Leitung (L10) aufweist,
der Energieaufbereiter (2b) einer beliebigen (21) von mehreren Energiespeichervorrichtungen (2) konfiguriert ist, um eine zweiadrige Wechselspannung anzulegen, die während des autonomen Betriebs an die Primärwicklung (51) auszugeben ist, und der Energieaufbereiter (2b) der übrigen (22, 23) von mehreren Energiespeichervorrichtungen (2) einen Ausgang aufweist, der während des autonomen Betriebs mit der ersten Spannungsleitung (L11) und der zweiten Spannungsleitung (L12) verbunden ist,
wenn jede der mehreren Energiespeichervorrichtungen (2) den autonomen Betrieb durchführt, eine beliebige der mehreren Energiespeichervorrichtungen (2) konfiguriert ist, um als eine Master-Vorrichtung (21) zu dienen, während die übrigen der mehreren Energiespeichervorrichtungen (2), die nicht als Master-Vorrichtung (21) dienen, konfiguriert sind, um als mindestens eine Slave-Vorrichtung (22, 23) zu dienen,
der Energieaufbereiter (2b) der Master-Vorrichtung (21) konfiguriert ist, um eine Spannungssteuerung zum Steuern einer Wechselspannungsausgabe während des autonomen Betriebs mit Blick auf eine Sollspannung durchzuführen, und
die mindestens eine Slave-Vorrichtung (22, 23) ferner eine Datenerfassungseinheit (2e) aufweist, die konfiguriert ist, um Messdaten eines ersten Stroms, der durch die erste Spannungsleitung (L11) fließt, und eines zweiten Stroms, der durch die zweite Spannungsleitung (L12) fließt, zu erfassen, wobei der Energieaufbereiter (2b) der mindestens einen Slave-Vorrichtung (22, 23) konfiguriert ist, um während des autonomen Betriebs eine Stromregelung zum Steuern eines Ausgangsstroms mit Blick auf einen Sollstrom durchzuführen, wobei der Sollstrom basierend auf den Messdaten des ersten Stroms und des zweiten Stroms bestimmt wurde.

2. Energiespeichersystem (100) nach Anspruch 1, wobei der Energieaufbereiter (2b) der Master-Vorrichtung (21) konfiguriert ist, um die während des autonomen Betriebs auszugebende zweiadrige Wechselspannung an die Primärwicklung (51) anzulegen, und
der Energieaufbereiter (2b) der mindestens einen Slave-Vorrichtung (22, 23) einen Ausgang aufweist, der während des autonomen Betriebs mit der ersten Spannungsleitung (L11) und der zweiten Spannungsleitung (L12) verbunden ist.

3. Energiespeichersystem (100) nach Anspruch 1 oder 2, wobei die mindestens eine Slave-Vorrichtung (22, 23) ferner eine Steuereinheit (2d) aufweist, die konfiguriert ist, um die Messdaten des ersten Stroms und des zweiten Stroms in einen umgewandelten Strom umzuwandeln, der einer Leitungsspannung zwischen der ersten Spannungsleitung (L11) und der zweiten Spannungsleitung (L12) entspricht, und den Sollstrom durch ein Teilen des umgewandelten Stroms zu berechnen.

4. Energiespeichersystem nach Anspruch 3, wobei die Steuereinheit (2d) konfiguriert ist, um den Sollstrom zu berechnen, indem sie den umgewandelten Strom durch die Anzahl der mehreren Energiespeichervorrichtungen (2) dividiert.

5. Betriebsverfahren für das Energiespeichersystem (100) nach einem der Ansprüche 1 bis 4, mit folgenden Schritten:
Durchführen einer Spannungssteuerung zum Steuern einer Wechselspannungsausgabe während des autonomen Betriebs mit Blick auf eine Sollspannung durch den Energieaufbereiter (2b) der Master-Vorrichtung (21), und
Durchführen einer Stromsteuerung zum Steuern eines Ausgangsstroms mit Blick auf einen Sollstrom, der basierend auf Messdaten eines ersten Stroms und eines zweiten Stroms, der durch die erste Spannungsleitung bzw. die zweite Spannungsleitung fließt, durch den Energieaufbereiter (2b) der mindestens einen Slave-Vorrichtung (22, 23) bestimmt wurde.

## Revendications

1. Système d'accumulation de puissance (100) comprenant :
une pluralité de dispositifs d'accumulation de puissance (2), chacun de la pluralité de dispositifs d'accumulation de puissance (2) comprenant une batterie d'accumulation (2a) et un conditionneur de puissance (2b) configuré pour convertir la puissance continue de la batterie d'accumulation (2a) en une puissance alternative à deux fils et sortir la puissance alternative à deux fils, chacun de la pluralité de dispositifs d'accumulation de puissance (2) pouvant être commuté entre un fonctionnement interconnecté au réseau électrique et un fonctionnement autonome sans être interconnecté avec le réseau électrique ; et
un transformateur (5) comprenant : un enroulement primaire (51) auquel une tension alternative à deux fils est appliquée ; et un enroulement secondaire (52) connecté à une ligne de puissance à trois fils monophasée, une charge étant connectée à la ligne de puissance à trois fils monophasée (85), dans lequel
la ligne de puissance à trois fils monophasée (85) comprend une première ligne de tension (L11), une deuxième ligne de tension (L12), et une ligne de neutre (L10),
le conditionneur de puissance (2b) de l'un quelconque (21) de la pluralité de dispositifs d'accumulation de puissance (2) est configuré pour appliquer une tension alternative à deux fils à sortir pendant le fonctionnement autonome à l'enroulement primaire (51), et le conditionneur de puissance (2b) du reste (22, 23) de la pluralité de dispositifs d'accumulation de puissance (2) a une sortie connectée à la première ligne de tension (L11) et à la deuxième ligne de tension (L12) pendant le fonctionnement autonome,
si chacun de la pluralité de dispositifs d'accumulation de puissance (2) effectue le fonctionnement autonome, l'un quelconque de la pluralité de dispositifs d'accumulation de puissance (2) est configuré pour servir en tant que dispositif maître (21), tandis que les dispositifs restants de la pluralité de dispositifs d'accumulation de puissance (2), autres que celui servant en tant que dispositif maître (21), sont configurés pour servir en tant qu'au moins un dispositif esclave (22, 23),
le conditionneur de puissance (2b) du dispositif maître (21) est configuré pour effectuer une commande de tension pour commander une sortie de tension alternative pendant le fonctionnement autonome vers une tension cible, et
ledit au moins un dispositif esclave (22, 23) comprend en outre une unité d'acquisition de données (2e) configurée pour acquérir les données mesurées d'un premier courant circulant à travers la première ligne de tension (L11) et d'un deuxième courant circulant à travers la deuxième ligne de tension (L12), le conditionneur de puissance (2b) dudit au moins un dispositif esclave (22, 23) étant configuré pour effectuer une commande de courant pour commander un courant de sortie vers un courant cible pendant le fonctionnement autonome, le courant cible ayant été déterminé sur la base des données mesurées du premier courant et du deuxième courant.

2. Système d'accumulation de puissance (100) selon la revendication 1, dans lequel
le conditionneur de puissance (2b) du dispositif maître (21) est configuré pour appliquer la tension alternative à deux fils à sortir pendant le fonctionnement autonome à l'enroulement primaire (51), et
le conditionneur de puissance (2b) dudit au moins un dispositif esclave (22, 23) a une sortie connectée à la première ligne de tension (L11) et à la deuxième ligne de tension (L12) pendant le fonctionnement autonome.

3. Système d'accumulation de puissance (100) selon la revendication 1 ou 2, dans lequel
ledit au moins un dispositif esclave (22, 23) comprend en outre une unité de commande (2d) configurée pour convertir les données mesurées du premier courant et du deuxième courant en un courant converti correspondant à une tension de ligne entre la première ligne de tension (L11) et la deuxième ligne de tension (L12) et calculer le courant cible en divisant le courant converti.

4. Système d'accumulation de puissance selon la revendication 3, dans lequel
l'unité de commande (2d) est configurée pour calculer le courant cible en divisant le courant converti par le nombre de la pluralité de dispositifs d'accumulation de puissance (2).

5. Procédé de fonctionnement pour le système d'accumulation de puissance (100) selon l'une quelconque des revendications 1 à 4, comprenant les étapes :
d'exécution d'une commande de tension pour commander une sortie de tension alternative pendant le fonctionnement autonome vers une tension cible par le conditionneur de puissance (2b) du dispositif maître (21), et
d'exécution d'une commande de courant pour commander un courant de sortie vers un courant cible qui a été déterminé sur la base des données mesurées d'un premier courant et d'un deuxième courant circulant à travers la première ligne de tension et la deuxième ligne de tension, respectivement, par le conditionneur de puissance (2b) dudit au moins un dispositif esclave (22, 23).
